Europäisches Patentamt

(19) European Patent Office

Office européen des brevets

(11) Publication number: **0 177 925**
**B1**

(12) **EUROPEAN PATENT SPECIFICATION**

(45) Date of publication of patent specification: **20.07.88**

(21) Application number: **85112693.8**

(22) Date of filing: **07.10.85**

(51) Int. Cl.⁴: **F 04 B 21/00, H 02 K 9/19**

(54) A motor pump unit for a high-pressure cleaning unit.

(30) Priority: **08.10.84 DK 4812/84**

(43) Date of publication of application:
**16.04.86 Bulletin 86/16**

(45) Publication of the grant of the patent:
**20.07.88 Bulletin 88/29**

(84) Designated Contracting States:
**AT BE CH DE FR GB IT LI LU NL SE**

(56) References cited:
**DE-B-1 528 561**
**DE-C-3 001 571**
**FR-A-1 337 117**
**FR-A-1 571 890**
**GB-A-2 029 505**
**US-A-4 213 745**

(73) Proprietor: **Westergaard, Knud Erik**
**Rolighedsvej 16**
**DK-9560 Hadsund (DK)**

(72) Inventor: **Westergaard, Knud Erik**
**Rolighedsvej 16**
**DK-9560 Hadsund (DK)**

(74) Representative: **Dipl.-Phys.Dr. Manitz Dipl.-Ing.,**
**Dipl.-Wirtsch. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22 (DE)**

Courier Press, Leamington Spa, England.

# Description

The present invention relates to a motor-pump unit for a high-pressure cleaning unit in accordance with the preamble of claim 1. A motor-pump unit of this kind is known from DE—C—3 001 571.

It has long been known to provide the necessary cooling of the motor and pump by incorporating flow channels for the relatively cold cleaning liquid in the motor housing. However, it has turned out that the cleaning liquid which is later ejected through a spray gun often contains aggressive components resulting in corrosion of the channels in the motor housing, which channels, for reasons of casting technique, are made from metals or alloys with a relatively low resistance to said aggressive media. Furthermore, a complex production technique is required for providing flow channels inside the motor housing.

It has been endeavoured to eliminate the disadvantages as regards the corrosion arising from the aggressive components of the cleaning liquid, by lining the channels in the motor housing with stainless steel or another resistant material. Naturally, this has made production even more complex and thus uneconomic.

In DK—B—149 218 (Danish patent application No. 1705/82) a motor pump unit is disclosed in which the conventional jacket cooling is combined with air cooling provided by means of an impeller placed at the end of the motor, which impeller is driven together with the motor. The impeller is dimensioned in such a way that in the periods when the pump ejects liquid through the spray gun, it will contribute considerably to the cooling of both motor and pump, and in the periods when the pump does not eject liquid, or when there are defects in the liquid circulation, it will develop a cooling effect which is sufficient for keeping motor and pump below critical temperatures, as these units do not emit so much heat when the ejection of the cleaning liquid has stopped.

However, the motor pump unit disclosed in DK—B—149 218 is also fairly complex because of the flow channels incorporated in the motor housing, which is lined with a material resistant to one of the above-mentioned aggressive components in the cleaning liquid, and the provision of an impeller at the end of the pump increases the length of the motor pump unit and thus increases the cost additionally.

In the motor-pump unit known from DE—C—3 001 571 the pump unit is a radial piston unit which extends substantially beyond the external dimensions of the housing containing the motor part. As a result of this, the part of the housing associated with the pump has a large exposed surface area which improves heat dissipation from the pump. However, this layout leads to a complicated and expensive design for the housing as a whole and the resulting arrangement is lacking in compactness.

Because the inner and outer walls defining the cooling jacket space are placed between two relatively complicated structures some means is required for clamping these structures together. Irrespective of whether the individual structures are ultimately welded to the cooling jacket or secured thereto by bolts or other means there will be a relatively poor transfer of heat between the cooling jacket and these other structures, because of the interfaces between them.

The object underlying the present invention is to improve the known jacket cooling so that the jacket cooling alone will provide reliable and sufficient cooling of the heat emitting components placed inside the housing, such as pump and motor, while achieving a design which is compact and inexpensive to manufacture.

This object is satisfied in an arrangement of the initially named kind, in accordance with the present invention, in that

a) said inner wall is substantially cylindrical, extends along substantially the full length of the unit and forms the radial boundary wall of a common housing,

b) said outer wall extends along the length of said inner wall from at least the end of the stator remote from said pump towards said pump beyond a transverse wall carrying the front bearing of said motor and the bearings of said pump, and

c) both said inner and outer walls are made as corrosion-resistant sheet metal shells.

In one embodiment of the motor-pump unit the cooling jacket space contains at least one rib inserted to extend helically at least part of the way between said apertures. The resulting helical coil thus devides the hollow space into a thread extending in the longitudinal direction of the housing.

This makes it possible to use very thin sheets for the cooling jacket of the common housing, as the helical coil inside the hollow space will provide the required mechanical strength in combination with the two sheets, and it is ensured that the full heat-emitting area is swept by the pressure liquid conveyed through the hollow space by the pump, so that the efficiency of the cooling is enhanced.

It is admittedly known from FR—A—1 571 890 to cool the stator of a motor by causing a coolant to flow along a helical path in the stator housing. The helical path is however formed in this case by a helical channel formed in the inner wall of the housing and is thus relatively expensive to manufacture.

Further important developments of the invention are set forth in claims 3, 4, 5 and 6.

By designing the wall of the housing as a double wall there is, for one thing, a possibility of a very simple production process, as the housing may for example be shaped by placing substantially circular-cylindrical sheet metal shells at a distance from one another, and thus there is no need to incorporate channels in a motor housing. By extending the double wall along the pump and motor at least, cooling of all heat-emitting units is provided at the same time.

Moreover, a compact arrangement results which is simple and economical to manufacture.

The use of stainless steel sheets for the walls means that high resistance to aggressive media is obtained without complicating the production process for the housing.

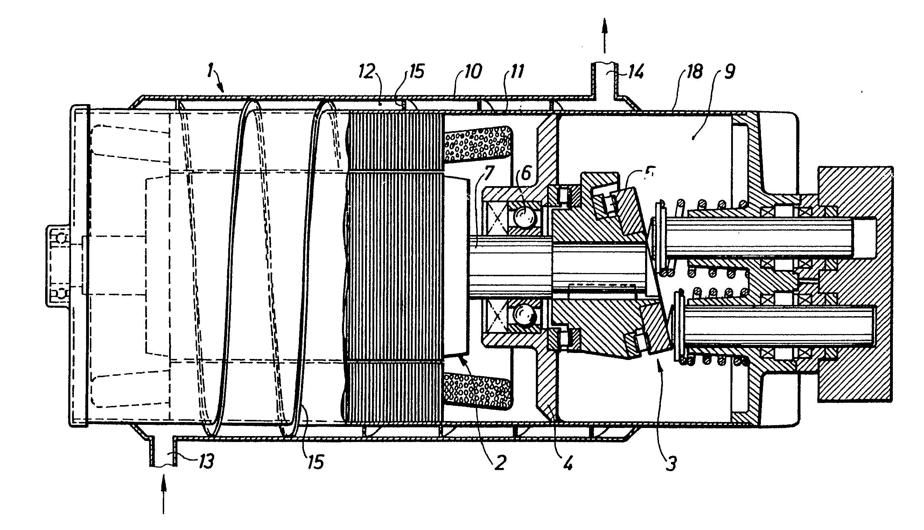

The invention will be described in more detail below, with reference to the drawing, which consists of one figure showing a schematic longitudinal sectional view of a motor pump unit designed in accordance with the invention.

In the drawing, the motor pump unit as a whole is designated by the reference number 1. The unit consists of a motor unit 2 known per se and a pump unit 3, which is a conventional axial piston pump in the embodiment shown. The motor 2 and the pump 3 are separated by a dividing plate 4, which is also designed to carry the bearings (5) of the axial pump and the bearings (6) of the motor. The motor 2 and the axial pump 3 are built together, in a known manner, by means of the shaft end protruding from the motor 7.

In the embodiment shown on the drawing, the motor 2 and the pump 3 are incorporated in a substantially circular-cylindrical housing 8 and shut off, in a known manner, a main chamber 9 around the pistons of the axial pump. The wall of the housing 8 is designed as a double wall, where the inner and outer wall are designated 11 and 10, respectively. Between the two walls there is an annular hollow space 12, through which the pressure liquid supplied by the pump can be caused to flow, as two apertures are provided at the ends of the annular hollow space 12 in the longitudinal direction of the housing, viz. one admission aperture 13 and one discharge aperture 14.

In the embodiment shown in the drawing there is a helical thread in the hollow space 12, as a substantially vertical parting face 15, extending along a helical line, is placed between the two walls 10 and 11.

## Claims

1. A motor-pump unit (1) for a high-pressure cleaning unit, in which the motor (2) and the pump (3) are placed in line with another in a housing (18) including a cooling jacket space (12) delimited by an inner (11) and an outer (10) wall of said housing (18), said cooling jacket space (12) having apertures (13, 14) enabling said space (12) to constitute part of a flow path carrying the liquid pumped by said pump (3), said cooling jacket space extending along that part of the housing (18) containing the stator of the motor (2), characterized in that
a) said inner wall (11) is substantially cylindrical, extends along substantially the full length of the unit and forms the radial boundary wall of a common housing,
b) said outer wall (10) extends along the length of said inner wall from at least the end of the stator remote from said pump towards said pump beyond a transverse wall (4) carrying the front bearing of said motor and the bearings (5) of said pump (3), and

c) both said inner (11) and outer (10) walls are made as corrosion-resistant sheet metal shells.

2. A motor-pump unit according to claim 1, characterized in that said cooling jacket space (12) contains at least one rib (15) inserted to extend helically at least part of the way between said apertures (13, 14).

3. A motor-pump unit according to claim 1 or claim 2 wherein said corrosion-resistant sheet metal shells are made stainless steel sheet.

4. A motor-pump unit according to claim 3, characterized in that said transverse wall is connected to said radially inner wall (11) of said common housing by welding.

5. A motor-pump unit according to any one of the preceding claims, characterized in that said pump is a swash plate driven axial piston pump.

6. A motor-pump unit according to claim 5, characterized in that the axial pistons of said axial piston pump are mounted in axially directed bores of an end cover of said motor-pump unit (1), said end cover being mounted in said radial boundary wall (11) of said common housing (18).

## Patentansprüche

1. Motorpumpenaggregat (1) für eine Hochdruckreinigungseinheit, bei welchem der Motor (2) und die Pumpe (3) hintereinander ausgerichtet in ein Gehause (18) eingesetzt sind, das einen Kühlmantelraum (12) enthält, der durch eine Innen- (11) und eine Außen- (10) Wand des Gehäuses (18) begrenzt ist, wobei der Kühlmantelraum (12) Öffnungen (13, 14) besitzt, die es ermöglichen, daß der Raum (12) einen Teil eines Strömungsweges bildet, der die durch die Pumpe (3) gepumpte Flüssigkeit trägt, wobei der Kühlmantelraum sich längs des Teiles des Gehäuses (18) erstreckt, der den stator des Motors (2) enthält, dadurch gekennzeichnet, daß
a) die Innenwand (11) im wesentlichen zylindrisch ist, sich im wesentlichen längs der Gesamtlänge der Einheit erstreckt und die radiale Begrenzungswand eines gemeinsamen Gehäuses bildet,
b) die Außenwand (10) sich längs der Länge der Innenwand von mindestens dem von der Pumpe abgelegenen Ende des Stators zu der Pumpe hin über eine Querwand (4) hinaus erstreckt, welche das vordere Lager des Motors und die Lager (5) der Pumpe (3) trägt, und
c) sowohl die Innen- (11) als auch die Außen- (10) wand als korrosionsbeständige Metallblechschalen hergestellt sind.

2. Motorpumpenaggregat nach Anspruch 1, dadurch gekennzeichnet, daß der Kühlmantelraum (12) mindestens eine Rippe (15) eingesetzt enthält, die sich wendelförmig mindestens um einen Teil des Weges zwischen den Öffnungen (13, 14) erstreckt.

3. Motorpumpenaggregat nach Anspruch 1 oder 2, bei dem die korrosionsbeständigen Metallblechschalen aus Edelstahlblech gefertigt sind.

4. Motorpumpenaggregat nach Anspruch 3, dadurch gekennzeichnet, daß die Querwand durch Schweißen mit der radialen Innenwand (11) des gemeinsamen Gehäuses verbunden ist.

5. Motorpumpenaggregat nach einem der vorangehenden Ansprüche, dadurch gekennzeichnet, daß die Pumpe eine taumelplatten-getriebene Axialkolbenpumpe ist.

6. Motorpumpenaggregat nach Anspruch 5, dadurch gekennzeichnet, daß die Axialkolben der Axialkolbenpumpe in axial gerichteten Bohrungen eines Enddeckels des Motorpumpenaggregates (1) montiert sind, wobei der Enddeckel in der radialen Begrenzungswand (1) des gemeinsamen Gehäuses (18) montiert ist.

## Revendications

1. Ensemble moteur-pompe (1) pour une unité de nettoyage à haute pression, dans laquelle le moteur (2) et la pompe (3) sont placés en ligne l'un avec l'autre dans un carter (18) présentant un espace (12) qui forme jaquette de refroidissement et qui est délimitée par un paroi intérieur (11) et par une paroi extérieure (10) dudit carter (18), ledit espace (12) formant jaquette de refroidissement présentant des ouvertures (13, 14) qui permettent audit espace (12) de constituer une partie d'un chemin d'écoulement qui transporte le liquide pompé par ladite pompe (3), ledit espace formant jaquette de refroidissement s'étendant le long de la partie du carter (18) qui contient le stator du moteur (2), caractérisé

a) en ce que ladite paroi intérieure (11) est sensiblement cylindrique, s'étend sur sensiblement toute la longueur de l'ensemble et forme la paroi limite, dans le sens radial, d'un carter commun,

b) en ce que la paroi extérieure (10) s'étend sur la longueur de ladite paroi intérieure, depuis au moins l'extrémité du stator éloignée de ladite pompe, en direction de ladite pompe, jusqu'au delà d'une paroi transversale (4) qui porte le roulement avant dudit moteur et les roulements (5) de ladite pompe (3), et c) en ce que ladite paroi intérieure (11) et ladite paroi extérieure (10) sont fabriquées sous forme de gaines en métal en feuille résistant à la corrosion.

2. Ensemble moteur-pompe selon la revendication 1, caractérisé en ce que ledit espace (12) formant jaquette de refroidissement contient au moins une nervure (15) insérée de façon à s'étendre hélicoïdalement sur au moins une partie du chemin situé entre les deux ouvertures (13, 14).

3. Ensemble moteur-pompe selon la revendication 1 ou la revendication 1, dans lequel lesdites gaines en métal en feuille résistant à la corrosion sont fabriquées en acier inoxydable en feuille.

4. Ensemble moteur-pompe selon la revendication 3, caractérisé en ce que ladite paroi transversale est reliée à ladite paroi intérieure, dans le sens radial, (11), dudit carter commun par soudage.

5. Ensemble moteur-pompe selon l'une quelconque des revendications précédentes, caractérisé en ce que ladite pompe est une pompe à piston axial entrainé par un plateau en nutation.

6. Ensemble moteur-pompe selon la revendication 5, caractérisé en ce que les pistons axiaux de ladite pompe par piston axial sont montés dans des alésages, dirigés axialement, d'un couvercle d'extrémité dudit ensemble moteur pompe (1), ledit couvercle d'extrémité étant monté dans ladite paroi limite, dans le sens radial, (11), dudit carter commun (18).

0 177 925